# EUROPEAN PATENT SPECIFICATION

(11) **EP 0 593 222 B1**
(45) Date of publication and mention of the grant of the patent: **21.06.1995**
(21) Application number: 93308021.0
(22) Date of filing: 08.10.1993
(51) Int. Cl.: B23B 29/034

(54) **Improvements in or relating to micrometric devices for finishing high precision bores**
Verbesserungen an mikrometrischen Vorrichtungen zur Feinbearbeitung von genauen Bohrungen
Améliorations dans des dispositifs micrométriques pour la finition de trous de précision

(30) Priority: 08.10.1992 BR 9204014
(43) Date of publication of application: 20.04.1994
(60) Divisional application: 94116312.3
(73) Proprietor: INDUSTRIAS ROMI S.A., BR-13450-00 Santa Barbara d'Oeste - SP (BR)
(72) Inventor: Romi, Giordano, 13450-000 Santa Barbara d'Oeste -SP (BR)
(74) Representative: Needle, Jacqueline

(56) References cited:
- DE-C- 590 390
- DE-C- 664 304
- DE-C- 853 087
- FR-A- 2 546 091
- GB-A- 2 204 513

## Description

The present invention relates to a micrometric device for finishing high precision bores comprising a substantially cylindrical, hollow body, a rotatable micrometric screw extending substantially longitudinally in said body, a tool supporting member supported by and movable with respect to said body, a tool holder carried by said tool supporting member, and moving means for causing linear movement of said tool supporting member upon rotation of said micrometric screw, and further comprising a rotatable graduated drum supported by said substantially cylindrical body and arranged coaxially relative to said micrometric screw, said graduated drum being coupled to said micrometric screw such that rotation of said drum is arranged to cause rotation of said screw, a plurality of teeth with interposed spaces being provided on a free end of said graduated drum. Such a micrometric device is known from GB-A-2250459
The present invention seeks to provide a micrometric device of the type defined but which has more precision.

According to the present invention a micrometric device of the afore mentioned type is characterised in that at least one pair of locating pins carried by said body are arranged to engage said teeth and spaces, said pins being resiliently biassed against said teeth and spaces.

A micrometric device of the invention has reduced dimensional requirements as compared to the known device, and also displays an increase in structural rigidity. This structural rigidity is very important where the tool is to be rotated at high speeds.

In an embodiment, said tool holder is movable relative to said tool supporting member substantially perpendicularly to the longitudinal extent of said micrometric screw.

Preferably, said micrometric screw is supported for rotation within said body and axially and radially with respect thereto by way of support means comprising at least two sets of spaced balls and respective spacer rings which are anchored within said body by way of surrounding support rings.

In an embodiment, said support rings of said support means comprise at least a first ring having a chamfer on an internal edge defining a support for said balls radially and in one axial direction, and a second ring substantially coaxial relative to the first, and defining a support for said balls in the opposite axial direction.

Preferably, said body is formed of at least two substantially cylindrical parts which are secured together, to one of which parts said support means is secured, for example, by fastening screws.

It is presently preferred that said moving means for causing linear movement of said tool supporting member upon rotation of said micrometer screw comprises a cylindrical rod coaxially arranged relative to said micrometric screw and supported by said body for slidable movement with respect thereto, said micrometric screw and said cylindrical rod being engaged by way of threaded means such that rotation of said screw causes substantially axial, linear movement of said cylindrical rod.

Preferably, said moving means further comprises first and second bushings arranged substantially coaxially and in alignment in the interior of said cylindrical rod and in threaded engagement with said cylindrical rod to provide a single assembly arranged substantially coaxially of an end of said screw, and wherein said cylindrical rod is engaged with a pair of concentric rods to which said tool supporting member is linked.

The upper bushing has the function of making void or suppressing backlash between the active flanks of the micrometric screw thread and the active flanks of the thread of the lower bushing. This is achieved as the upper bushing is provided with an internal thread and an external thread having different pitches. Other elements may be similarly arranged to produce a combined effect of backlash suppression and fine adjustment by use of threaded elements of different pitches.

In an embodiment, said cylindrical rod has a planar surface provided with rectilinear teeth with converging flanks, said rectilinear teeth being coupled to rectilinear teeth with converging flanks which are provided on a planar surface of said two concentric rods, and wherein said concentric rods extend substantially perpendicularly to the longitudinal axis of said screw, and wherein the rectilinear teeth of said cylindrical rod extend at an angle relative to the longitudinal axis of said rod.

Preferably, the extreme upper edge of the upper bushing is provided with a nut having the double function of locking said upper bushing and of maintaining unchanged the condition of zero or void backlash between active flanks of threads of the upper bushing, of the lower bushing and the micrometric screw.

Preferably the locating pins and the spaces of the graduated drum are arranged such that when one locating pin of a pair is engaged with a space between two of the teeth, the other locating pin of the pair is engaged with the crest of a tooth other than either of said two teeth.

The purposeful existence of a gap between the position of pins and respective spaces on said graduated drum generates a duplicating number of stages of radial displacement of the graduated drum as the second pin of a pair is arranged at an angular distance a half pitch larger or smaller than an entire number of pitches so that before the first pin achieves a new location after 1/nth rotation, the set of spaces is located and actuated by the second pin.

Preferably, manual access to the drum is made by way of lateral openings on said body which permit manual rotation of the graduated drum.

In an embodiment, rotation of the drum is made through several non-manual external actuating means, said drum being adapted to receive movement from said external actuating means.

In an embodiment, clamping of the tool holder on the tool supporting member or movable crossbeam is made by the juxtaposition of dovetail portions on the upper surface of the crossbeam with corresponding and complementary portions on the lower portion of the tool holder. A safety device may be provided to protect the tool holder from loosening when subject to centrifugal forces. For example, said safety device may comprise a threaded stud which presses a safety pin, said pin being provided with an indented end which mates with teeth on the upper surface of the movable crossbeam. The crossbeam may also be provided with screws which besides enabling clamping of the tool holder by tightening against the movable crossbeam, also allow pre-positioning of said tool holder in accordance with the diameter of the bore to be finished.

Embodiments of the present invention will hereinafter be described, by way of example, with reference to the accompanying drawings, in which:
Figure 1 is an upper view of a micrometric device of the invention showing a tool holder arranged on its base;
Figure 2 is a longitudinal section of the micrometric device taken on line A-A of Figure 1;
Figure 2a shows an enlarged schematic detail of the micrometric device of Figure 2, illustrating mechanical elements for converting a rotating movement into a linear movement, and a backlash suppression system;
Figure 3 is a longitudinal section of the micrometric device taken on line B-B of Figure 2;
Figure 4 is a cross section of the micrometric device taken on line D-D of Figure 3;
Figure 4a shows an enlarged schematic detail of Figure 4 and illustrates mechanical elements for converting axial motion into radial or cross motion, and backlash suppression means;
Figure 5 is a cross section of the micrometric device taken on line E-E of Figure 2 and showing fastening screws and two openings enabling access to a graduated drum;
Figure 6 is an enlarged and partially cut schematic longitudinal section of a free end of a graduated drum showing two locating pins;
Figure 6a is a front view of the circular face of the graduated drum showing a plurality of teeth uniformly arranged around the circular face and converging to its centre;
Figure 7 is a section of a tool holder to be used for machining bores larger than the body of the micrometric device; and
Figure 7a is a section of a tool holder to be used for machining bores smaller than the micrometric device body.

The drawings show a micrometric device for finishing high precision bores and illustrate several changes in the construction of a prior art micrometric device such as that described and claimed in United Kingdom published Patent Application No. 2250459.

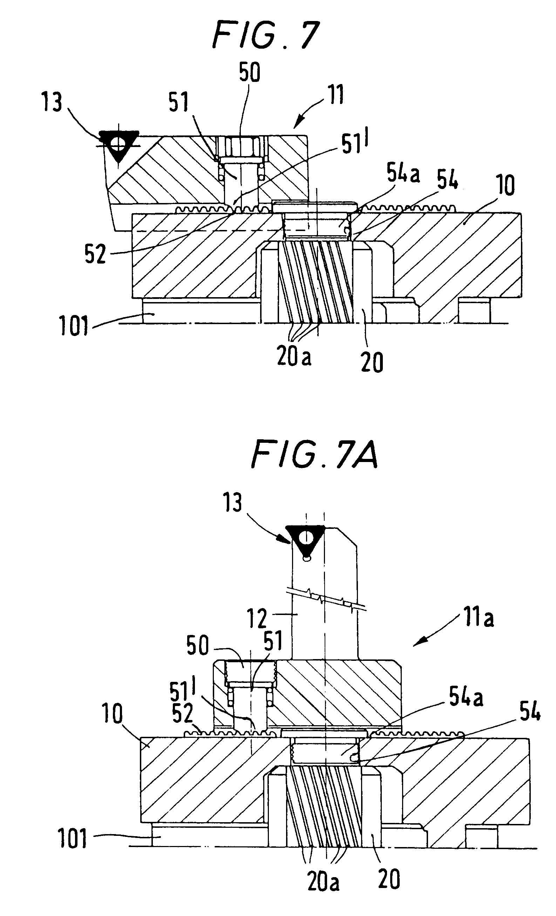

A micrometric device embodying the present invention is useful for finishing both through and blind bores. Moreover, the improvements of the present invention enable the micrometric device to finish bores having a very small diameter, for example, as shown in Figure 7a.

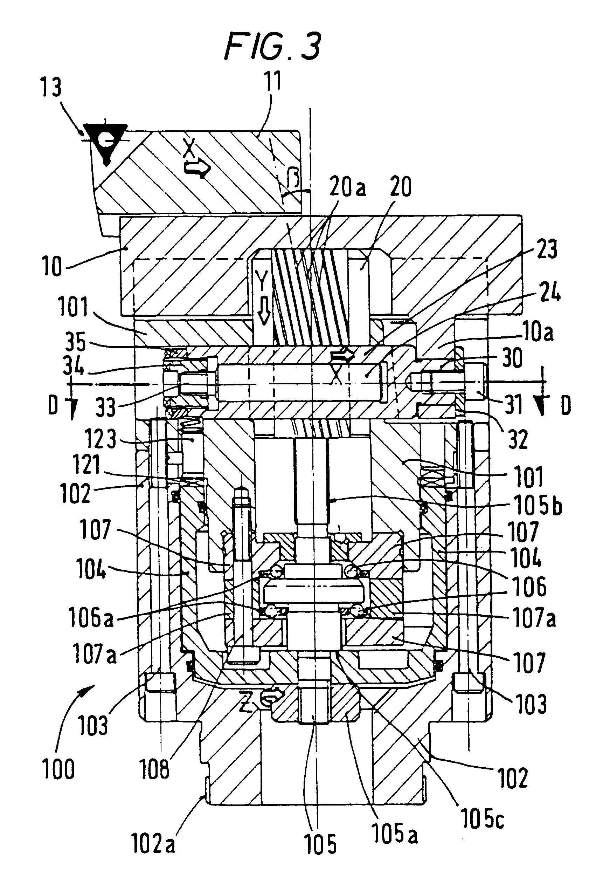

Figure 3 shows a tool 13 in a position of initial or starting displacement in the inward direction of the longitudinal axis of the micrometric device. The relative displacement of the component parts of the micrometric displacement are represented by X, Y and Z arrows.

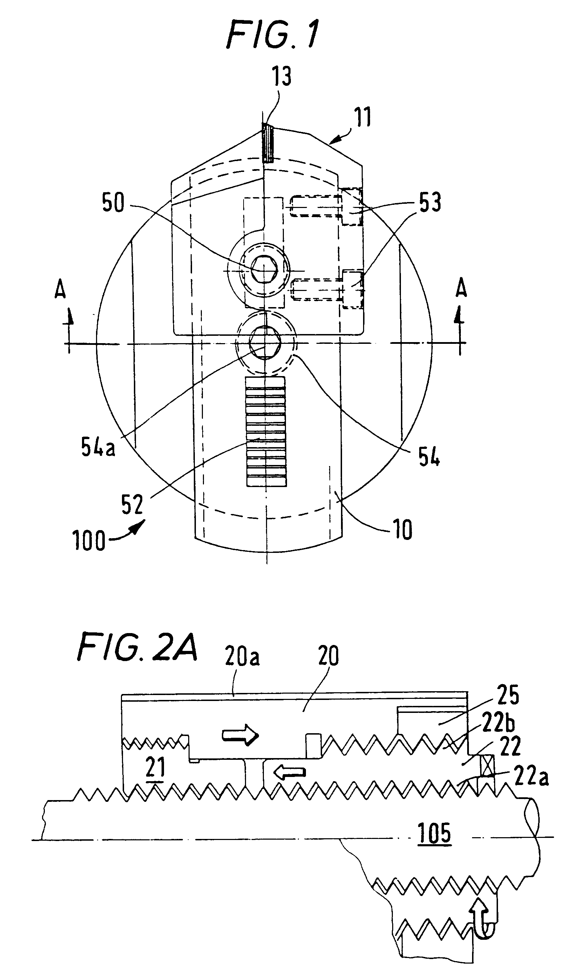

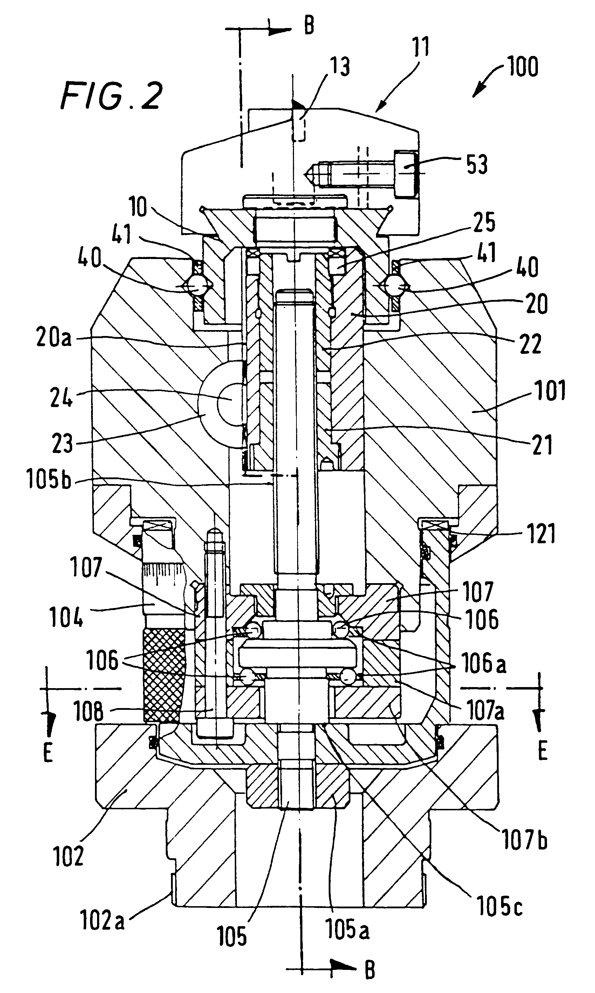

As shown in Figures 2, 7 and 7a, a micrometric device 100 has tool holders, or shanks, 11, 11a which may be adjusted substantially perpendicularly to the longitudinal axis of the micrometric device 100. Such adjustment enables a boring or cutting tool 13 clamped on tool holder 11 or 11a to be maintained on top of a movable crossbeam both for boring large bores, for example, as shown in Figure 7, or for boring bores as small as the smallest diameter of an extension rod 12, as shown in Figure 7a.

Micrometric device 100, as shown in Figures 1, 2 and 3, is internally provided with a mechanism which is different from that provided on the micrometric devices described, for example, in GB-A-2250459. The mechanism described and illustrated herein provides a shorter and more compact construction of a micrometric device 100 as a whole, with a reduction in the overhang of the tool 13 and an increase in the rigidity of the tool 13. Thus, the effects of centrifugal force are minimized as much as possible when the micrometric device rotates at high operating speeds.

The illustrated micrometric device 100 is provided with a movement transmission mechanism comprising a graduated drum 104 coaxially and jointly mounted on a micrometric screw 105. The mounting arrangement of the drum 104 and the screw 105 ensures that rotation of the drum 104 results in a rotation of the micrometric screw 105.

The micrometric screw 105 incorporates a collar and is axially maintained and radially supported in relation to the body of the micrometric device 100 by way of two series of balls 106 and their spacer rings 106a. The spacer rings 106a, with the series of balls 106 arranged therein, are anchored inside the body of the micrometric device 100 by way of support rings 107, 107a and 107b. In the embodiment illustrated, an intermediate ring 107a is arranged between an upper ring 107 and a lower ring 107b. The upper ring 107 is provided with a chamfer at its internal lower edge such that the chamfer, together with a rest of a right angle formed on an upper portion of the collar of micrometric device 105, provides a radial and axial support for the balls 106 lodged between the chamfer of ring 107 and the right angle rest of the collar. An upper surface of the lower ring 107b provides together with a lower face of the collar of the micrometric screw 105, a second axial support for the balls 106 retained between the faces of the lower ring 107b and the collar of the micrometric screw 105. In this way, the upper and lower rings complete a support system for supporting the micrometric screw 105 in relation to the body of the micrometric device 100.

The support system, comprising the balls 106, the spacer rings 106a, and the rings 107, 107a and 107b, is fixed by fastening screws 108 to an upper body 101 which is shaped substantially as a cylindrical hollow body as shown in Figure 2. The upper body 101 is attached to a complementary lower cylindrical body 102 by fastening screws 103 as shown in Figure 3, so as to form a single body assembly coaxially mounted around, and housing, the micrometric screw 105. The graduated drum 104 is incorporated in, and coaxial with, the cylindrical hollow body 101, 102 formed thereby.

The micrometric device 100 is provided with external threads 102a at a free edge of the lower cylindrical body 102. The micrometric device 100 can be threaded to a machine tool mandrel (not shown) by means of these external threads 102a.

The lower end of the micrometric screw 105 is provided with a nut 105a for holding the graduated drum 104 in proximity to a shoulder 105c of the micrometric screw 105. A thread 105b is provided on an upper extension of the micrometric screw 105 inside the upper cylindrical body 101. Thread 105b coaxially trespasses through, and engages with, a lower bushing 21 and an upper busing 22. The upper bushing 22 and lower bushing 21 are provided with internal and external threads which trespass coaxially through, and engage with, an indented cylindrical rod 20 slidably lodged in a coaxial hole of the upper cylindrical body 101.

The indented cylindrical rod 20, together with the lower bushing 21 and the upper bushing 22, comprise one single assembly coaxially mounted around the upper portion or extension of the micrometric screw 105. The assembly is arranged inside the interior of the upper cylindrical body 101 as shown in Figure 2. The construction of the indented rod 20 and bushings 21 and 22 enables the bushings to convert rotating movement of the graduated drum 104, which is transmitted to the micrometric screw 105, into linear movement of the cylindrical rod 20. In its turn, the linear movement of the rod 20 is arranged to displace a pair of concentric rods 23 and 24 shown in Figures 2 and 3. The rods 23, 24 are arranged substantially perpendicular to the longitudinal or geometric axis of the micrometric screw 105.

The upper bushing 22 functions to suppress or substantially remove any backlash between active thread flanks of the micrometric screw 105 and active thread flanks of the lower bushing 21. In this respect, the term "active flanks" indicates those flanks of a thread which interact with flanks of another thread. Thus, the bushing 22 enables a contact condition to be established without backlash between the flanks that interact between themselves. The backlash suppression function is performed in a controlled manner in that the upper bushing 22 is provided with an internal thread 22a and an external thread 22b which have different pitches, that is, the pitch of the external thread 22b of the upper bushing 22 differs from that of the internal thread 22a of the upper bushing 22. The internal thread 22a of the upper bushing engages with the micrometric screw 105 and therefore the pitch of the internal thread 22a is equal to the pitch of the thread of the micrometric screw 105. As a consequence, the relative displacement between the upper bushing 22 and the cylindrical rod 20 is equal to the difference between the pitches of internal thread 22a and external thread 22b of the upper bushing 22.

The backlash suppression system also comprises a nut 25 arranged around an upper extreme edge of the upper bushing 22. Nut 25 locks the upper bushing 22 in a set position to maintain a zero or null backlash condition between the active flanks of the thread of the upper bushing 22, the thread of the lower bushing 21 and the thread of the micrometric screw 105 as shown in Figure 2a.

As shown in Figures 2, 2a, 3, 4 and 4a, the cylindrical rod 20 incorporates a plane portion contained on an imaginary, dimensional plane substantially parallel to its geometric or longitudinal axis. The plane portion is provided with rectilinear teeth 20a which are oriented at an angle β relative to the geometric or longitudinal axis of the rod 20. The geometric axis of the rod 20 coincides with the geometric axis of the micrometric screw 105. The rectilinear teeth 20a are formed by converging flanks which mate with teeth 23a and 24a arranged on the plane portion of each one of the concentric rods 23 and 24. The teeth 23a, 24a on rods 23, 24 are formed of converging flanks. The plane portion of each concentric rod is contained on the same imaginary plane and is arranged substantially parallel to the geometric axis of those rods. The plane portion of each rod 23, 24 coincides with the imaginary plane that contains the plane portion of the cylindrical rod 20.

The conversion of longitudinal displacement of the cylindrical rod 20 into perpendicular displacement of the concentric rods 23 and 24 is achieved through the slidable coupling of the indented parts, e.g., teeth 20a, 23a, and 24a.

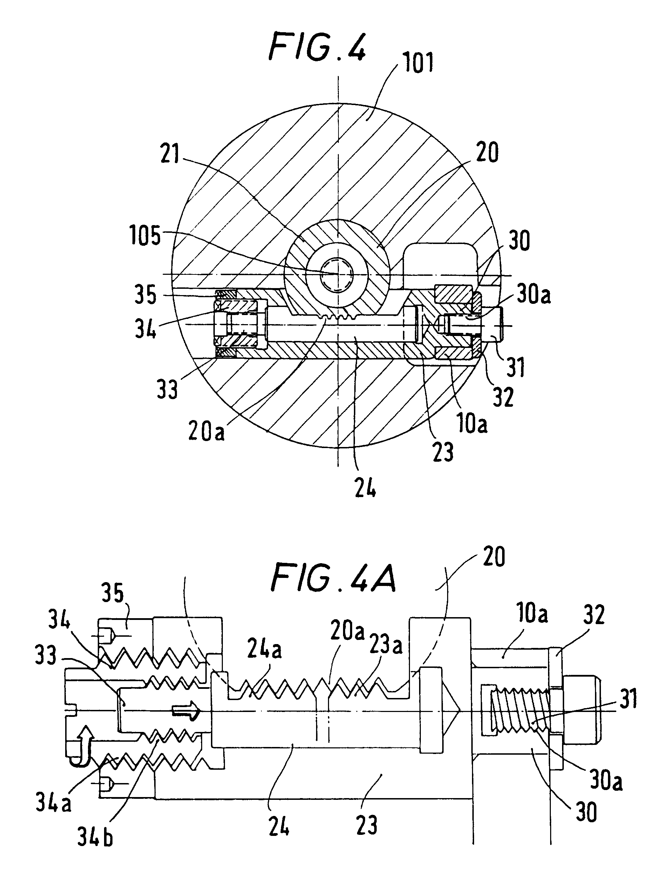

As shown in Figures 3, 4 and 4a, the rod 24 is arranged in the interior of rod 23. Rod 23 has a terminal 30 arranged at one side. Terminal 30 is provided with a thread 30a which interacts with a screw 31 lodged in the terminal 30. Screw 31 holds an ear, or projection, 10a of the crossbeam 10. Ear 10a is held between a portion of the terminal 30 and a washer 32 by the action of the screw 31.

On the opposite side of the pair of concentric rods 23 and 24, rod 24 has a terminal 33 which is provided with an external thread. A bushing 34 has an internal thread 34b which engages with the threading on terminal 33. Bushing 34 also has an external thread 34a which has a different pitch than that of the internal thread 34b. In this case, and in a similar manner to the action of the threads of different pitches of the upper bushing 22, the external thread 34a of the bushing 34 has a pitch different from the pitch of its internal thread 34b which is equal to the pitch of the thread of terminal 33. This arrangement has a double purpose, that is, to enable an ultra fine adjustment of the relative displacement to be made between the concentric rods 23 and 24, and also to enable the suppression of backlash between the teeth 20a of cylindrical rod 20 and the teeth 23a and 24a of the concentric rods 23 and 24, respectively. This is achieved by guaranteeing a metal to metal contact as described in GB-A-2250459.

The micrometric device illustrated further comprises a nut 35 arranged on the external thread 34a of the bushing 34. The nut 35 functions to maintain the pre-established conditions of zero backlash substantially constant by adjustment of the bushing 34. Figure 4a shows the locking action of nut 35 actuating simultaneously against bushing 34 and rod 23 to ensure the zero backlash condition between the active flanks of the assembly.

As shown in Figures 2 and 3, the movable crossbeam 10 acts as a slidable support for tool shanks 11, 11a and moves under the guidance of two rows of balls 40 which roll, with minimum friction and without play, on linear and parallel tracks, or guideways. These guideways are substantially V-shaped and are provided on the walls of a recess existing on the upper portion of upper body 101 and on the sides of the movable crossbeam 10. The recess extends from one side to the other in the upper portion of upper body 101 in a direction substantially perpendicular to the geometric axis of the micrometric screw 105. In this manner, the movable crossbeam 10 is also displaceable substantially perpendicularly to the geometric axis of the micrometric screw 105. The displacement of the movable crossbeam 10 is achieved in an extremely stable way (without rocking) because the movable crossbeam 10 rests on three points. Two of the points are formed by the balls 40 lodged in the V-shaped guideways and the third point is comprised by the connection of the ear 10a of the movable crossbeam 10 to the terminal 30 of the concentric rod 23.

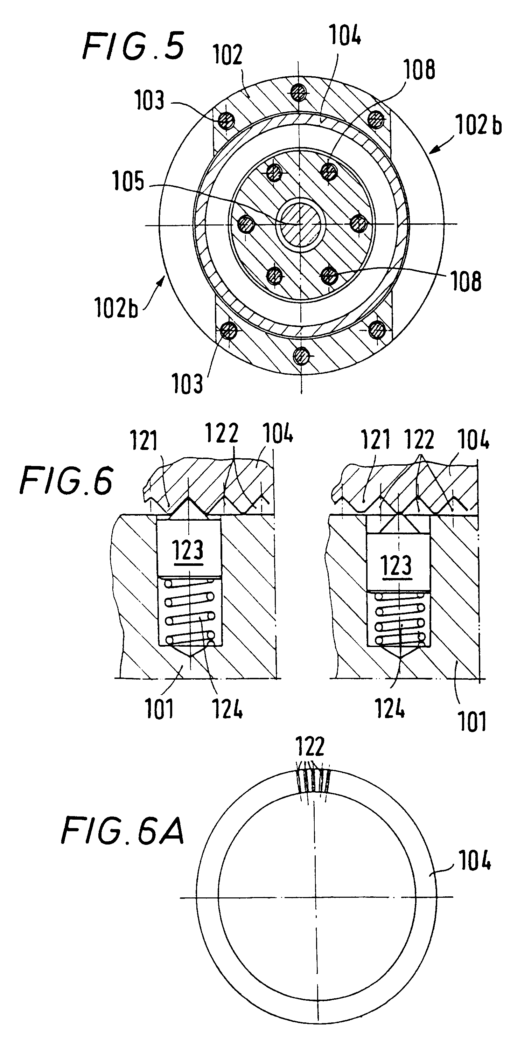

As shown in Figures 2, 6 and 6a, the free end of the graduated drum 104 is provided with a plurality of teeth 121 and spaces 122 arranged between the teeth 121. At least one pair of locating pins 123 actuate on the teeth 121. A free end of each locating pin 123 is preferably engaged in one space between any two teeth 121 and/or on the crest of any teeth. Thus, if one of the locating pins is engaged in a space between two teeth, the free end of the other locating pin will rest on a crest of another one of the teeth 121. In order to prevent the locating pins 123 from interfering with one another, the locating pin which is resting on the crest of one of the teeth is not one of the two teeth which define the space therebetween in which the other locating pin is positioned.

Referring to Figures 2 and 6 and the description above, the action of springs 124 on the locating pins 123 is directed to establish a condition of resilient pressure such that the locating pins 123 actuate and perform their inherently effective function as locating pins for the graduated drum 104. As such, the locating pins will provide adequate angular positioning for the drum 104 and at the same time prevent an accidental adjustment change of the angular position previously made.

As can be seen in Figure 6, a gap is defined between the position of the locating pins 123 and the spaces 122 in such a manner so as to generate a duplicity of stages of radial displacement of the graduated drum 104. Therefore, the second locating pin 123 is positioned at an angular distance of a half pitch larger or smaller than a complete quantity of pitches so that before the first pin 123 reaches a new position after rotation 1/n, the set of spaces 122 is located and actuated by the second pin 123. The fraction 1/n corresponds to one nth, where n is the number of spaces and defines the pitch which is equal to the interval between two consecutive spaces.

From the above, the result is obtained that each half pitch is equal to the faction 2/n, or two nth, which in turn corresponds to one line (or division) of the graduated drum 104.

The number of locating pins in the device embodying the present invention may be more than two pins 123. In one embodiment, for example, four locating pins 123 may be used wherein two of the locating pins 123 are positioned on the crest of any teeth 121 and between spaces 122 not occupied by the remaining two locating pins.

As shown in Figure 5, manual access to the graduated drum 104 is through lateral openings 102b provided in the lower body 102 which permit normal rotation of the graduated drum 104. The rotation of graduated drum 104 can also be made by several external non-manual actuating means (not shown). In this embodiment, a drum 104 is used which is capable of receiving movements from the external actuating means.

Tool shanks 11 and 11a are held on the crossbeam 10 by juxtaposition of dovetail parts arranged on the upper surface of the crossbeam 10 and on the lower surface of the tool shank 11 and 11a. Preferably, the parts on the crossbeam are male, whilst the parts on the tool shank are female and correspond to the male parts to ensure an adequate fit.

Figures 1, 7, and 7a show a safety device to prevent the tool shank 11 and 11a from loosening up when subject to a centrifugal force. This is achieved by introducing a threaded stud 50 that presses against a safety pin 51 provided with a toothed terminal 51' which engages on teeth 52 located on the upper surface of the crossbeam 10. The tool shank 11, 11a is provided with screws 53 that hold the tool shank 11, 11a in a secure position by tightening it against the crossbeam 10 and allow also the pre-positioning of the tool shank 11, 11a in accordance with the bore diameter to be finished by the micrometric device 100.

The device also comprises a threaded hole 54 which is provided with a threaded plug 54a. The hole 54 provides access to a normal tool in the event an adjustment of the upper bushing 22 is required as the upper bushing 22 suppresses mechanical backlash as described and shown in Figure 2a.

It will be appreciated that modifications and alterations may be made to the embodiments as described above within the scope of the appended claims.

## Claims

1. A micrometric device (100) for finishing high precision bores comprising a substantially cylindrical, hollow body (101, 102), a rotatable micrometric screw (105) extending substantially longitudinally in said body (101, 102), a tool supporting member (10) supported by and movable with respect to said body (101, 102), a tool holder (11, 11a) carried by said tool supporting member (10), and moving means (20, 23, 24) for causing linear movement of said tool supporting member (10) upon rotation of said micrometric screw (105), and further comprising a rotatable graduated drum (104) supported by said substantially cylindrical body (101, 102) and arranged coaxially relative to said micrometric screw (105), said graduated drum (104) being coupled to said micrometric screw (105) such that rotation of said drum (104) is arranged to cause rotation of said screw (105), a plurality of teeth (121) with interposed spaces (122) being provided on a free end of said graduated drum (104), characterised in that at least one pair of locating pins (123) carried by said body (101, 102) are arranged to engage said teeth (121) and spaces (122), said pins (123) being resiliently biassed against said teeth and spaces.

2. A micrometric device as claimed in Claim 1, wherein the locating pins (123) and the spaces (122) of the graduated drum (104) are arranged such that when one locating pin (123) of a pair is engaged with a space between two of the teeth (121), the other locating pin (123) of the pair is engaged with the crest of a tooth (121) other than either of said two teeth.

3. A micrometric device as claimed in Claim 1 or Claim 2, wherein said tool holder (11, 11a) is movable relative to said tool supporting member (10) substantially perpendicularly to the longitudinal extent of said micrometric screw (105).

4. A micrometric device as claimed in any of Claims 1 to 3, wherein said micrometric screw (105) is supported for rotation within said body (101, 102) and axially and radially with respect thereto by way of support means comprising at least two sets of spaced balls (106) and respective spacer rings (106a) which are anchored within said body (101, 102) by way of surrounding support rings (107, 107a, 107b).

5. A micrometric device as claimed in Claim 4, wherein said support rings of said support means comprise at least a first ring (107) having a chamfer on an internal edge defining a support for said balls (106) radially and in one axial direction, and a second ring (107b) substantially coaxial relative to the first, and defining a support for said balls (106) in the opposite axial direction, and wherein, preferably, said body (101, 102) is formed of at least two substantially cylindrical parts (101, 102) which are secured together, to one (101) of which parts said support means is secured, for example, by fastening screws (108).

6. A micrometric device as claimed in any preceding claim, wherein said moving means (20, 23, 24) for causing linear movement of said tool supporting member (10) upon rotation of said micrometric screw (105) comprises a cylindrical rod (20) coaxially arranged relative to said micrometric screw and supported by said body (101, 102) for slidable movement with respect thereto, said micrometric screw (105) and said cylindrical rod (20) being engaged by way of threaded means such that rotation of said screw (105) causes substantially axial, linear movement of said cylindrical rod (20).

7. A micrometric device as claimed in Claim 6, wherein said moving means (20, 23, 24) further comprises first and second bushings (21, 22) arranged substantially coaxially and in alignment in the interior of said cylindrical rod (20) and in threaded engagement with said cylindrical rod (20) to provide a single assembly arranged substantially coaxially of an end of said screw, and wherein said cylindrical rod (20) is engaged with a pair of concentric rods (23, 24) to which said tool supporting member (10) is linked.

8. A micrometric device as claimed in Claim 7, wherein said cylindrical rod (20) has a planar surface provided with rectilinear teeth (20a) with converging flanks, said rectilinear teeth (20a) being coupled to rectilinear teeth (23a, 24a) with converging flanks which are provided on a planar surface of said two concentric rods (23, 24), and wherein said concentric rods (23, 24) extend substantially perpendicularly to the longitudinal axis of said screw (105), and wherein the rectilinear teeth (20a) of said cylindrical rod (20) extend at an angle (β) relative to the longitudinal axis of said rod (20).

9. A micrometric device as claimed in Claim 8, wherein said planar surface of said cylindrical rod (20) is arranged in a dimensional plane which extends parallel with respect to the longitudinal axis of said micrometric screw (105).

10. A micrometric device as claimed in any preceding claim, wherein said tool supporting member (10) is a movable crossbeam (10) supported on said body (101, 102) to move substantially perpendicularly to the longitudinal axis of said micrometric screw (105), and wherein movement of said crossbeam (10) relative to said body is guided by at least two rows of spaced balls (40) arranged on to roll along respective facing tracks of Said body (101, 102) and crossbeam (10).

## Patentansprüche

1. Mikrometervorrichtung (100) zur Endbearbeitung von Präzisionsbohrungen, mit einem im wesentlichen zylindrischen, hohlen Grundkörper (101, 102), einer drehbaren Mikrometerschraube (105), die sich im wesentlichen in Längsrichtung im Grundkörper (101, 102) erstreckt, einem Werkzeughaltebauteil (10), das durch den Grundkörper (101, 102) gehalten wird und relativ zu diesem bewegbar ist, einer Werkzeughalterung (11, 11a), die vom Werkzeughaltebauteil (10) gehalten wird, und mit Verstelleinrichtungen (20, 23, 24), um bei Drehung der Mikrometerschraube (105) eine lineare Bewegung des Werkzeughaltebauteils (10) zu bewirken, und außerdem mit einer drehbaren, mit Teilstrichen versehenen Trommel (104), die durch den im wesentlichen zylindrischen Grundkörper (101, 102) gehalten wird und bezüglich der Mikrometerschraube (105) koaxial angeordnet ist, wobei die mit Teilstrichen versehene Trommel (104) so mit der Mikrometerschraube (105) gekoppelt ist, daß eine Drehung der Trommel (104) eine Drehung der Schraube (105) bewirkt, und wobei ein freies Ende der mit Teilstrichen versehenen Trommel (104) mit einer Anzahl von Zähnen (121) mit zwischenliegenden Zwischenräumen (122) versehen ist, **dadurch gekennzeichnet,** daß zumindest ein am Grundkörper (101, 102) gehaltenes Paar Fixierstifte (123) dazu ausgelegt ist, um mit den Zähnen (121) und Zwischenräumen (122) einzugreifen, wobei die Stifte (123) gegen die Zähne und die Zwischenräume nachgiebig vorgespannt sind.

2. Mikrometervorrichtung nach Anspruch 1, wobei die Fixierstifte (123) und die Zwischenräume (122) der mit Teilstrichen versehenen Trommel (104) so ausgestaltet sind, daß bei Eingriff eines Fixierstiftes (123) eines Paares mit einem Zwischenraum zwischen zwei Zähnen (121) der andere Fixierstift (123) dieses Paares an der Spitze eines Zahnes (121) anliegt, welcher nicht zu den beiden Zähnen gehört.

3. Mikrometervorrichtung nach Anspruch 1 oder Anspruch 2, wobei die Werkzeughalterung (11, 11a) bezüglich des Werkzeughaltebauteils (10) im wesentlichen senkrecht zur Längserstreckung der Mikrometerschraube (105) bewegbar ist.

4. Mikrometervorrichtung nach einem der Ansprüche 1 bis 3, wobei die Mikrometerschraube (105) im Grundkörper (101, 102) drehbar und relativ zu diesem axial und radial durch eine Halteeinrichtung gehalten ist, die zumindest zwei Sätze beabstandeter Kugeln (106) und zugehörige Abstandsringe (106a) aufweist, die durch umgebende Halteringe (107, 107a, 107b) im Grundkörper (101, 102) gehalten werden.

5. Mikrometervorrichtung nach Anspruch 4, wobei die Halteringe der Halteeinrichtung zumindest einen ersten Ring (107) mit einer Abschrägung an einer inneren Kante, der in radialer und in einer axialen Richtung eine Lagerung für die Kugeln (106) bildet, und einen zweiten Ring (107b) umfassen, der bezüglich des ersten Ringes im wesentlichen koaxial liegt und in der entgegengesetzten axialen Richtung eine Lagerung für die Kugeln (106) bildet, und wobei der Grundkörper (101, 102) vorzugsweise aus mindestens zwei im wesentlichen zylindrischen Teilen (101, 102) gebildet ist, die miteinander verbunden sind, wobei die Halteeinrichtung beispielsweise durch Befestigungsschrauben (108) an einem (101) der beiden Teile befestigt ist.

6. Mikrometervorrichtung nach einem der vorhergehenden Ansprüche, wobei die Verstelleinrichtung (20, 23, 24), die bei Drehung der Mikrometerschraube (105) einem lineare Bewegung des Werkzeughaltebauteils (10) bewirkt, einen zylinderförmigen Stab (20) aufweist, der bezüglich der Mikrometerschraube koaxial angeordnet ist und vom Grundkörper (101, 102) relativ zu diesem gleitend verschiebbar gehalten wird, wobei die Mikromeferschraube (105) und der zylinderförmige Stab (20) mittels eines Gewindes ineinandergreifen, so daß die Drehung der Schraube (105) eine im wesentlichen axiale, lineare Bewegung des zylinderförmigen Stabes (20) bewirkt.

7. Mikrometervorrichtung nach Anspruch 6, wobei die Verstelleinrichtung (20, 23, 24) außerdem erste und zweite Hülsen (21, 22) aufweist, die im wesentlichen koaxial und in Ausrichtung im Inneren des zylinderförmigen Stabes (20) und in Schraubverbindung mit dem zylinderförmigen Stab (20) angeordnet sind, um eine einzige Anordnung zu bilden, die im wesentlichen koaxial zu einem Ende der Schraube angeordnet ist, und wobei der zylinderförmige Stab (20) mit einem Paar konzentrischer Stäbe (23, 24) in Eingriff steht, mit denen das Werkzeughaltebauteil (10) verbunden ist.

8. Mikrometervorrichtung nach Anspruch 7, wobei der zylinderförmige Stab (20) eine ebene Oberfläche hat, die mit geradlinigen Zähnen (20a) versehen ist, welche konvergierende Flanken haben, wobei die geradlinigen Zähne (20a) mit geradlinigen Zähnen (23a, 24a), welche konvergierende Flanken haben, eingreifen, die an einer ebenen Oberfläche der beiden konzentrischen Stäbe (23, 24) vorgesehen sind, wobei sich die konzentrischen Stäbe (23, 24) im wesentlichen senkrecht zur Längsachse der Schraube (105) erstrecken, und wobei sich die geradlinigen Zähne (20a) des zylinderförmigen Stabes (20) mit einem Winkel (β) relativ zur Längsachse des Stabes (20) erstrecken.

9. Mikrometervorrichtung nach Anspruch 8, wobei die ebene Oberfläche des zylinderförmigen Stabes (20) in einer Maßebene verläuft, die sich parallel zur Längsachse der Mikrometerschraube (105) erstreckt.

10. Mikrometervorrichtung nach einem der vorhergehenden Ansprüche, wobei das Werkzeughaltebauteil (10) ein bewegbarer Querträger (10) ist, der am Grundkörper (101, 102) angebracht ist, um im wesentlichen senkrecht zur Längsachse der Mikrometerschraube (105) bewegt werden zu können, und wobei die Bewegung des Querträgers (10) bezüglich des Grundkörpers durch zumindest zwei Reihen beabstandeter Kugeln (40) geführt wird, die dazu ausgelegt sind, um entlang jeweiliger, sich gegenüberliegender Schienen im Grundkörper (101, 102) und im Querträger (10) zu rollen.

## Revendications

1. Dispositif micrométrique (100) pour la finition de forures de haute précision, comprenant un corps creux sensiblement cylindrique (101, 102), une vis micrométrique rotative (105) qui s'étend en direction sensiblement longitudinale dans ledit corps (101, 102), un organe de support d'outil (10) qui est supporté par ledit corps (101, 102) et est mobile par rapport à celui-ci, un porte-outil (11, 11a) que porte ledit organe de support d'outil (10), et des moyens de transmission (20, 23, 24) pour produire un mouvement linéaire dudit organe de support d'outil (10) lors de la rotation de ladite vis micrométrique (105), et comprenant en outre un tambour gradué rotatif (104) supporté par ledit corps sensiblement cylindrique (101, 102) et dispose coaxialement par rapport à ladite vis micrométrique (105), ledit tambour gradué (104) étant accouplé à ladite vis micrométrique (105) de sorte qu'une rotation dudit tambour (104) soit propre à produire la rotation de ladite vis (105), une multiplicité de dents (121) étant prévue, avec des espaces (122) interposés, sur une extrémité libre dudit tambour gradué (104), caractérisé en ce qu'au moins deux broches de positionnement (123) portées par ledit corps (101, 102) sont disposées par paires de façon à entrer en prise avec lesdites dents (121) et lesdits espaces (122), lesdites broches (123) étant sollicitées élastiquement vers lesdites dents et lesdits espaces.

2. Dispositif micrométrique selon la revendication 1, dans lequel les broches de positionnement (123) et les espaces (122) du tambour gradué (104) sont disposés de sorte que lorsqu'une broche de positionnement (123) d'une paire est en prise avec un espace entre deux des dents (121), l'autre broche de positionnement (123) de la paire est en prise avec le sommet d'une dent (121) autre que l'une ou l'autre de ces deux dents.

3. Dispositif micrométrique selon la revendication 1 ou 2, dans lequel ledit porte-outil (11, 11a) est mobile par rapport audit organe de support d'outil (10) dans une direction sensiblement perpendiculaire à l'étendue longitudinale de ladite vis micrométrique (105).

4. Dispositif micrométrique selon l'une quelconque des revendications 1 à 3, dans lequel ladite vis micrométrique (105) est montée à rotation dans ledit corps (101, 102) et est supportée axialement et radialement par rapport à celui-ci, à l'aide de moyens de support comprenant au moins deux jeux de billes espacées (106) et des bagues d'espacement respectives (106a) qui sont fixées dans ledit corps (101, 102) au moyen d'anneaux de support (107, 107a, 107b) qui les entourent.

5. Dispositif micrométrique selon la revendication 4, dans lequel lesdits anneaux de support desdits moyens de support comprennent au moins un premier anneau (107) qui présente, sur un bord interne, un chanfrein définissant un support pour lesdites billes (106) radialement et dans une direction axiale, et un second anneau (107b) sensiblement coaxial par rapport au premier, définissant un support pour lesdites billes (106) dans la direction axiale opposée, et dans lequel ledit corps (101, 102) est de préférence formé d'au moins deux parties sensiblement cylindriques (101, 102) qui sont fixées ensemble, parties à l'une (101) desquelles lesdits moyens de support sont fixés, par exemple par des vis de fixation (108).

6. Dispositif micrométrique selon l'une quelconque des revendications 1 à 5, dans lequel lesdits moyens de transmission (20, 23, 24) produisant un mouvement linéaire dudit organe de support d'outil (10) lors de la rotation de ladite vis micrométrique (105) comprennent une tige cylindrique (20) disposée coaxialement par rapport à ladite vis micrométrique et supportée par ledit corps (101, 102) de manière à pouvoir se déplacer en glissant par rapport à celui-ci, ladite vis micrométrique (105) et ladite tige cylindrique (20) étant en prise par l'intermédiaire de moyens filetés de sorte que la rotation de ladite vis (105) produise un mouvement linéaire, sensiblement axial de ladite tige cylindrique (20).

7. Dispositif micrométrique selon la revendication 6, dans lequel lesdits moyens de transmission (20, 23, 24) comprennent en outre des première et seconde douilles (21, 22) disposées coaxialement et dans l'alignement à l'intérieur de ladite tige cylindrique (20), en prise par filetage avec ladite tige cylindrique (20), pour former un ensemble individuel disposé coaxialement à une extrémité de ladite vis, et dans lequel ladite tige cylindrique (20) est en prise avec une paire de tiges concentriques (23, 24) auxquelles est attache ledit organe de support d'outil (10).

8. Dispositif micrométrique selon la revendication 7, dans lequel ladite tige cylindrique comporte une surface plane munie de dents rectilignes (20a) à flancs convergents, lesdites dents rectilignes (20a) étant accouplées à des dents rectilignes (23a, 24a) à flancs convergents qui sont formées sur une surface plane desdites deux tiges concentriques (23, 24), et dans lequel lesdites tiges concentriques (23, 24) s'étendent en direction sensiblement perpendiculaire par rapport à l'axe longitudinal de ladite vis (105), et dans lequel les dents rectilignes (20a) de ladite tige cylindrique (20) s'étendent en formant un angle (β) avec l'axe longitudinal de ladite tige (20).

9. Dispositif micrométrique selon la revendication 8, dans lequel ladite surface plane de ladite tige cylindrique (20) est située dans un plan dimensionnel qui s'étend parallèlement à l'axe longitudinal de ladite vis micrométrique (105).

10. Dispositif micrométrique selon l'une quelconque des revendications 1 à 9, dans lequel ledit organe de support d'outil (10) est une barre transversale (10) montée sur ledit corps (101, 102) de façon à pouvoir se déplacer dans une direction essentiellement perpendiculaire à l'axe longitudinal de ladite vis micrométrique (105), et dans lequel le mouvement de ladite barre transversale (10) par rapport audit corps est guidé par au moins deux rangées de billes espacées (40) disposées de façon à rouler le long de pistes respectives se faisant face sur ledit corps (101, 102) et sur ladite barre transversale (10).
